# EUROPÄISCHE PATENTANMELDUNG

(11) **EP 4 488 195 A2**
(43) Veröffentlichungstag der Anmeldung: **08.01.2025**
(21) Anmeldenummer: 24186924.7
(22) Anmeldetag: 05.07.2024
(51) Int. Cl.: B65D 81/02, B32B 3/12

(54) **VERPACKUNGSMATERIAL, UMFASSEND EIN DEFORMIERTES ZELLENGEFÜGE, HERSTELLUNGSVERFAHREN UND VERWENDUNG DES VERPACKUNGSMATERIALS**

(30) Priorität: 07.07.2023 DE 102023118048
(71) Anmelder: Knüppel Verpackung GmbH & Co. KG, 34346 Hann. Münden (DE)
(72) Erfinder: Beyer, Marcel, 34346 Hann. Münden (DE)
(74) Vertreter: v. Bezold & Partner Patentanwälte - PartG mbB

(57) **Zusammenfassung**

Ein Verpackungsmaterial 100 umfasst ein Zellengefüge 10 mit einer flächigen Ausdehnung und mit einer Vielzahl von Zellen 11, insbesondere Wabenzellen, die jeweils eine umlaufende Zellenwand 12 aufweisen, die sich zwischen zwei Gefügeseiten 13 in einer Normalrichtung senkrecht zur flächigen Ausdehnung des Zellengefüges 10 erstreckt, wobei das Zellengefüge 10 eine derartige Deformation aufweist, dass die Zellenwände 12 der Zellen 11 entlang der Normalrichtung gekrümmt sind, wobei das Zellengefüge 10 vorzugsweise über seine gesamte Dicke deformiert ist und wobei das Zellengefüge 10 an mindestens einer der Gefügeseiten 13 offen ist und Ränder der Zellenwände 12 der Zellen 11 zu der mindestens einen der Gefügeseiten 13 hin freiliegen. Es werden auch Verfahren zur Herstellung des Verpackungsmaterials 100 und Verwendungen des Verpackungsmaterials 100 beschrieben.

## Beschreibung

Die vorliegende Erfindung betrifft ein zellbasiertes Verpackungsmaterial, das ein Zellengefüge mit einer flächigen Ausdehnung und einer Vielzahl von deformierten Zellen umfasst. Das Verpackungsmaterial kann insbesondere aus einem Papiermaterial hergestellt sein. Des Weiteren betrifft die Erfindung ein Verfahren zur Herstellung eines Verpackungsmaterials, insbesondere des zellbasierten Verpackungsmaterials. Die Erfindung betrifft auch Verwendungen des Verpackungsmaterials, zum Beispiel als Verpackungsmaterial für Transportgut oder als Hilfsmaterial in der Bautechnik oder in der Möbeltechnik.

Es ist allgemein bekannt, dass Verpackungen, insbesondere für den Transport von Gegenständen, aus verschiedenen Materialien zusammengesetzt sind, die verschiedene Funktionen der Verpackung erfüllen. Beispielsweise wird aus Papier oder Karton, insbesondere Wellpappe, ein Behälter einer Verpackung gebildet, der den zu transportierenden Gegenstand aufnimmt. Typischerweise enthält eine Verpackung des Weiteren ein Kunststoff-basiertes Material zum Schutz des verpackten Gegenstands gegen äußere mechanische Stöße. Diese mechanische Schutzfunktion kann von Papier oder Karton nicht oder nur beschränkt erfüllt werden, da sie bei Belastung nur plastisch und irreversibel verformbar sind, so dass insbesondere bei wiederholter Ausübung einer ähnlichen Belastung (z. B. wiederholte Stöße aus der gleichen Richtung) die Schutzfunktion verloren geht.

Die Verwendung von Kunststoff in einer im Übrigen Papier- oder Karton-basierten Verpackung hat mehrere Nachteile. Erstens zeichnet sich die Verpackung durch relativ hohe Herstellungskosten aus. Des Weiteren ist die Entsorgung der Verpackung nach deren Verwendung umständlich. Schließlich können Kunststoff enthaltende Verpackungen häufig Nachhaltigkeitskriterien nicht erfüllen.

Aus DE 69506229 T2 ist eine Verpackung zum Transport von Gegenständen bekannt, die für eine thermische Isolation der verpackten Gegenstände ausgelegt ist. Insbesondere für eine einfache, vollständige Entsorgung der Verpackung wird in DE 69506229 T2 vorgeschlagen, die Verpackung aus Platten mit einem Papier-Wabenkern, der beidseitig mit Überzugsschichten abgedeckt ist, herzustellen. Mit dieser Verpackung wird zwar eine thermische Isolation erzielt und die Entsorgung vereinfacht. Ein mechanischer Schutz der verpackten Gegenstände ist jedoch nur beschränkt gegeben, da der Wabenkern nicht nachgiebig oder deformierbar ist, sondern Stöße von außen nahezu ungedämpft an die verpackten Gegenstände überträgt.

Aus US 11 298 913 B2 ist ein Wabenmaterial zur Verwendung als Energie absorbierende Schutzschicht in Helmen bekannt. Das Wabenmaterial ist entlang seiner Dickenrichtung lokal beschränkt vordeformiert, um eine reduzierte Anfangssteifigkeit bei Krafteinwirkung einzustellen, und im Übrigen in Dickenrichtung undeformiert. Der nicht deformierte Teil des Wabenmaterials ist nicht nachgiebig, so dass ähnliche Nachteile wie bei DE 69506229 T2 auftreten können.

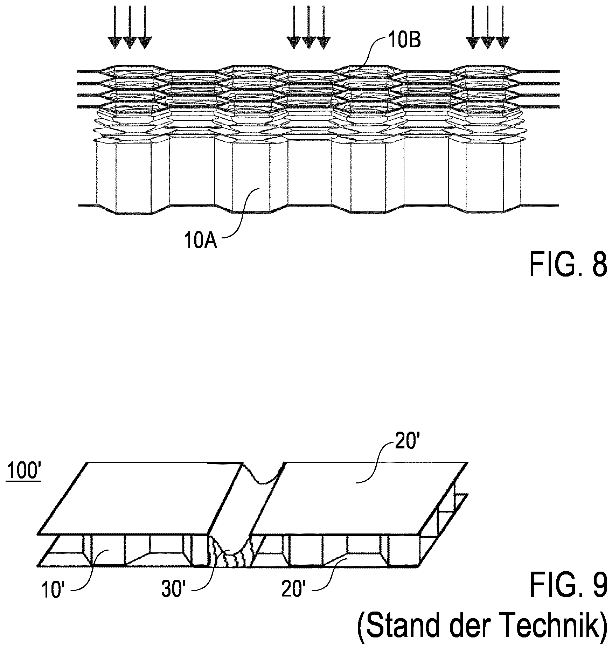

In DE 20 2022 100 548 A1 wird ein Verpackungsmaterial in Form einer Sandwichplatte 100' mit einem Wabenkern 10' und beidseitigen Deckschichten 20' beschrieben, die schematisch in Figur 9 (Stand der Technik) gezeigt ist. Durch Beaufschlagung der Sandwichplatte 100' mit einer ausreichend hohen Presskraft wird eine lokale oder flächige Deformation 30' mit einer Quetschung des Wabenkerns 10' erzielt. Im Bereich der Deformation 30' weist die Sandwichplatte 100' elastische Eigenschaften auf.

Die aus DE 20 20022 100 548 U1 bekannte Sandwichplatte 100' hat zwar den Vorteil, dass mit dieser sowohl eine Behälter- als auch eine Schutzfunktion zum Schutz gegen mechanische Stöße erfüllt werden können. In der Praxis hat sich die Anwendung der Sandwichplatte 100' jedoch als nachteilig erwiesen. So kann das Material nur beschränkt an die Form der verpackten Ware angepasst werden. Beispielsweise kann das deformierte Zellenmaterial nur beschränkt geknickt werden, und ein Umwickeln von zu verpackender Ware ist nicht praktikabel. Des Weiteren ist die elastische Deformierbarkeit und damit die Eignung als Stoßschutz beschränkt.

Die Aufgabe der Erfindung ist es, ein verbessertes zellbasiertes Verpackungsmaterial bereitzustellen, mit dem Nachteile herkömmlicher Techniken vermieden werden. Das Verpackungsmaterial soll insbesondere bei seiner Anwendung vereinfacht an verschiedene Formen von Gegenständen, z. B. zu verpackenden oder mit dem Verpackungsmaterial zu versehenden Gegenständen, anzupassen sein, einfach herstellbar sein, verbesserte elastische Eigenschaften aufweisen, eine einfache Entsorgung begünstigen und/oder einen erweiterten Anwendungsbereich haben. Die Aufgabe der Erfindung ist es auch, ein verbessertes Verfahren zur Herstellung eines zellbasierten Verpackungsmaterials bereitzustellen, mit dem Nachteile herkömmlicher Techniken vermieden werden.

Das Verfahren soll insbesondere eine vereinfachte Herstellung des Verpackungsmaterials ermöglichen und/oder Verpackungsmaterial liefern, das in Bezug auf die Formgebung, die elastischen Eigenschaften und/oder die Entsorgung verbessert ist und/oder einen erweiterten Anwendungsbereich hat. Eine weitere Aufgabe der Erfindung ist es, neue Verwendungen von zellbasiertem Verpackungsmaterial bereitzustellen.

Diese Aufgaben werden durch die Merkmale der unabhängigen Ansprüche gelöst. Vorteilhafte Ausführungsformen und Anwendungen der Erfindung ergeben sich aus den abhängigen Ansprüchen.

Gemäß einem ersten allgemeinen Gesichtspunkt der Erfindung wird die Aufgabe durch ein Verpackungsmaterial gelöst, das ein Zellengefüge mit einer flächigen Ausdehnung und mit einer Vielzahl von Zellen, insbesondere Wabenzellen, umfasst, die jeweils eine umlaufende Zellenwand aufweisen, die sich zwischen zwei Gefügeseiten in einer Normalrichtung senkrecht zur flächigen Ausdehnung des Zellengefüges erstreckt, wobei das Zellengefüge eine derartige Deformation aufweist, dass die Zellenwände der Zellen entlang der Normalrichtung gekrümmt sind, wobei das Zellengefüge vorzugsweise über seine gesamte Dicke deformiert ist. Gemäß der Erfindung ist das Zellengefüge an mindestens einer der Gefügeseiten, vorzugsweise an beiden Gefügeseiten, offen und Ränder der Zellenwände der Zellen sind zu der mindestens einen der Gefügeseiten hin freiliegend.

Gemäß einem zweiten allgemeinen Gesichtspunkt der Erfindung wird die Aufgabe durch ein Verfahren zur Herstellung eines Verpackungsmaterial gelöst, das die Schritte umfasst: Bereitstellung eines undeformierten Vorläufer-Zellengefüges mit einer flächigen Ausdehnung und mit einer Vielzahl von undeformierten Zellen, insbesondere Wabenzellen, die jeweils eine umlaufende Zellenwand aufweisen, die sich gerade zwischen zwei Gefügeseiten in einer Normalrichtung senkrecht zur flächigen Ausdehnung des Zellengefüges erstreckt, wobei das Vorläufer-Zellengefüge eine Dicke in Normalrichtung aufweist, an mindestens einer der Gefügeseiten offen ist und Ränder der Zellenwände der Zellen zu der mindestens einen der Gefügeseiten hin freiliegen, und Bildung eines deformierten Zellengefüges durch Pressen des Vorläufer-Zellengefüges mit einer Pressvorrichtung, die auf das Vorläufer-Zellengefüge eine Presskraft derart ausübt, dass die Zellenwände der Zellen gekrümmt, insbesondere einfach oder in verschiedenen Richtungen mehrfach gekrümmt, und die Zellen deformiert werden, wobei das deformierte Zellengefüge eine Dicke in Normalrichtung aufweist, die geringer als die Dicke des Vorläufer-Zellengefüges ist.

Die undeformierten Zellen umfassen vorzugsweise Wabenzellen (so genannte Honigwaben-Zellen), und besonders bevorzugt umfasst das Vorläufer-Zellengefüge eine regelmäßige Anordnung von Wabenzellen. Vorzugsweise wird das Verpackungsmaterial gemäß dem ersten allgemeinen Gesichtspunkt der Erfindung oder eine seiner Ausführungsformen durch das Herstellungsverfahren gemäß dem zweiten allgemeinen Gesichtspunkt der Erfindung oder eine seiner Ausführungsformen hergestellt.

Gemäß einem dritten allgemeinen Gesichtspunkt der Erfindung wird die Aufgabe durch eine Verwendung des Verpackungsmaterial gemäß dem ersten allgemeinen Gesichtspunkt der Erfindung oder einer seiner Ausführungsformen als Verpackungsmaterial für Transportgut und/oder Lagergut, Baumaterial, Isolationsmaterial, Sichtschutzmaterial, Möbelpolstermaterial, insbesondere Matratze oder Polsterunterlage, Pflanz- oder Aussatzträgermaterial, Dekorationsmaterial, Separator für Kleinstteile, und/oder Sportmaterial, insbesondere Sportmatte, gelöst.

Das erfindungsgemäße Verpackungsmaterial umfasst ein Zellengefüge (oder: Zellstruktur, flächige Anordnung von Zellen), das eine Konfiguration mit deformierten (kollabierten) Zellen aufweist, die von gekrümmten, zum Beispiel geknickten, einfach oder mehrfach gefalteten oder gequetschten, Zellenwänden begrenzt sind. Das deformierte Zellengefüge kann auch als gequetschtes oder zerstörtes oder kollabiertes Zellengefüge bezeichnet werden. Das deformierte Zellengefüge kann zum Beispiel eine Struktur wie eine Struktur des zerstörten Zellenkerns im Bereich der Deformation 30' der herkömmlichen Sandwichplatte 100' (siehe Figur 9) aufweisen. Vorzugsweise zeichnet sich das erfindungsgemäß vorgesehene deformierte Zellengefüge durch eine unregelmäßige, zufällige Deformation der deformierten Zellen aus.

Das Zellengefüge hat eine flächige Ausdehnung, die sich entlang einer Ebene im Raum (x-y-Ebene) erstrecken kann, und eine Dicke in einer Normalrichtung senkrecht zur flächigen Ausdehnung, zum Beispiel in einer z-Richtung senkrecht zur x-y-Ebene, aufweist. Die entgegengesetzten flächigen Gefügeseiten (Gefügeoberflächen) des Zellengefüges werden vorzugsweise unmittelbar durch die Ränder oder geknickte Randstreifen der Zellenwände gebildet.

Jede Zelle des Zellengefüges wird in der Ausdehnung des Zellengefüges, zum Beispiel in der x-y-Ebene, von der umlaufenden, deformierten Zellenwand umgeben, die sich von der einen Gefügeseite zu der anderen Gefügeseite des Zellengefüges erstreckt. Jede Zelle kann allgemein die Gestalt eines Prismas mit einer mehreckigen, z. B. 3-, 4-, 5-, 6-eckigen, Grundfläche, einer deckungsgleichen Deckfläche und aus Rechtecken zusammengesetzten Mantelfläche (Zellwand) aufweisen. Vorzugsweise können die Zellen regelmäßige, 6-eckige (hexagonale) Grundflächen aufweisen und regelmäßig angeordnet sein (Wabe, Honigwabe).

Alle Zellen des Zellengefüges können die gleiche Form und Größe haben, oder die Zellen des Zellengefüges können verschiedene Formen und/oder Größen haben. Das Zellengefüge kann z. B. aus Waben mit verschiedenen Größen der Grundflächen zusammengesetzt sein. Die Zellen des Zellengefüges können regelmäßig angeordnet sein. Die Erfindung ist jedoch nicht auf Zellengefüge beschränkt, welche im undeformierten Vorläufer-Zellengefüge die Form einer regelmäßigen Anordnung von Zellen, z. B. in Form von Wabenzellen, aufweisen. Alternativ können Zellengefüge mit einer unregelmäßigen Anordnung von Zellen verwendet werden.

In einem undeformierten Zellengefüge, das ein Vorläufermaterial bei der Herstellung des Verpackungsmaterials bildet, können sich die Zellenwände zunächst in der Normalrichtung senkrecht zur flächigen Ausdehnung des Zellengefüges erstrecken, d. h. sie können von einer Gefügeseite zur anderen Gefügeseite verlaufen. Im deformierten Zellengefüge des Verpackungsmaterials haben die deformierten Zellenwände in der Normalrichtung keine gerade, sondern eine relativ zur Normalrichtung einfach oder in verschiedenen Richtungen mehrfach gekrümmte Form. Das Zellengefüge kann über seine gesamte Dicke deformiert sein, oder es kann in einer ersten Schicht deformiert sein und in einer weiteren Schicht undeformiert sein (Hybrid-Polster), wie mit weiteren Einzelheiten unten ausgeführt wird. Das Verpackungsmaterial kann als Netz beschrieben werden, dessen Maschen durch die deformierten Zellenwände von Zellen gebildet werden.

Ein Verpackungsmaterial kann sich bevorzugt dadurch auszeichnen, dass das Zellengefüge an der mindestens einen der Gefügeseiten vollständig offen ist und die Ränder der Zellenwände aller Zellen zu der mindestens einen der Gefügeseiten hin freiliegen. Das Verpackungsmaterial kann an der mindestens einen der Gefügeseiten vorzugsweise frei von einer mit dem Zellengefüge stofflich fest verbundenen Deckschicht sein. In Abhängigkeit von der konkreten Anwendung kann das Verpackungsmaterial an der mindestens einen offenen Gefügeseite eine Hüllschicht tragen, die vorzugsweise nach Herstellung des Verpackungsmaterials angebracht wird und vorzugsweise keine stofflich feste Verbindung mit dem Zellengefüge bildet.

Alternativ kann zur Anpassung an die Form eines z. B. zu verpackenden oder mit dem Verpackungsmaterial zu versehenden Gegenstands vorgesehen sein, dass das Zellengefüge an der mindestens einen der Gefügeseiten in mindestens einem offenen, flächigen Oberflächenabschnitt offen ist und die Ränder der Zellenwände aller Zellen in dem mindestens einen offenen Oberflächenabschnitt zu der mindestens einen der Gefügeseiten hin freiliegen, während das Zellengefüge an der mindestens einen der Gefügeseiten im Übrigen außerhalb von dem mindestens einen offenen Oberflächenabschnitt mit mindestens einer Deckschicht geschlossen ist und die Zellen außerhalb des mindestens einen offenen Oberflächenabschnitts von der mindestens einen Deckschicht geschlossen sind. Die mindestens eine Deckschicht kann bei der Herstellung des Verpackungsmaterials vor der Deformation mit dem undeformierten Vorläufer-Zellengefüge verbunden sein oder nach der Deformation mit dem deformierten Zellengefüge verbunden werden.

Der Erfinder hat festgestellt, dass die Beschränkungen des herkömmlichen Verpackungsmaterials z. B. gemäß DE 20 20022 100 548 U1 (siehe Figur 9) verursacht werden, indem der mit den Deckschichten flächig vollständig verbundene Wabenkern gepresst wird. Bei der herkömmlichen Struktur liefert der deformierte Zellenkern zwar eine gewisse Elastizität. Aufgrund der Deckschichten wird das Gefüge des deformierten Wabenkerns jedoch stabilisiert, so dass das herkömmliche Verpackungsmaterial auch mit dem deformierten Wabenkern den Charakter einer Wabenkernplatte behält, nur beschränkt deformierbar ist und nicht ohne Weiteres an die Form eines zu polsternden Gegenstands angepasst werden kann. Indem erfindungsgemäß mindestens eine der flächigen, vollständig abdeckenden Deckschichten, vorzugsweise beide der Deckschichten, einer Zellenstruktur weggelassen werden und das mindestens einseitig offene Zellengefüge deformiert wird, werden diese Beschränkungen des herkömmlichen Verpackungsmaterials überwunden.

Das erfindungsgemäß mindestens einseitig offene Zellengefüge zeichnet sich im Vergleich zum herkömmlichen Verpackungsmaterial bei gleichen Eigenschaften des Materials der Zellenwände durch eine erhöhte Elastizität und Flexibilität aus. Des Weiteren wurde vom Erfinder festgestellt, dass das ohne die mindestens eine Deckschicht hergestellte Zellengefüge vereinfacht aus einem undeformierten Vorläufer-Zellengefüge herstellbar ist. Die erhöhte Flexibilität des erfindungsgemäßen Verpackungsmaterials erlaubt ein vereinfachtes Anlegen an gekrümmte, insbesondere unregelmäßig geformte, Gegenstände.

Das deformierte Zellengefüge des erfindungsgemäßen Verpackungsmaterials hat eine Struktur, die gleich einer Struktur ist, die durch Pressen eines undeformierten Vorläufer-Zellengefüges erhalten wird. Mit dem Begriff "Zelle" wird allgemein die kleinste Einheit des Zellengefüges bezeichnet, die vorzugsweise im undeformierten Vorläufer-Zellengefüge eine mehreckige Grundfläche und darauf senkrecht angeordnete, gerade Zellenwände aufweist. Besonders bevorzugt hat die Zelle im undeformierten Vorläufer-Zellengefüge eine sechseckige, regelmäßige Grundfläche, das heißt die Zelle oder Zellenzelle im undeformierten Zustand ist vorzugsweise eine so genannte Wabe (oder Wabenzelle).

Vorteilhafterweise liefert das Verpackungsmaterial bei Einwirkung mechanischer Stöße eine elastische Dämpfung. Energie eines äußeren Stoßes wird durch eine elastische oder nahezu elastische Verformung des deformierten Zellengefüges aufgenommen. Das Verpackungsmaterial ist reversibel deformierbar, d. h. es geht nach einer Belastung in die Ausgangslage zurück. Vorteilhafterweise kann durch das deformierte, sich in der flächigen Ausdehnung des Zellengefüges unregelmäßig verteilende Material des Zellengefüges eine im Wesentlichen lückenlose, blickdichte Bedeckung des mit dem Verpackungsmaterial versehenen Gegenstands erhalten werden.

Vorzugsweise können die Zellenwände der Zellen gemäß einer Ausführungsform des Verpackungsmaterials an ihren freiliegenden Rändern an der mindestens einen der Gefügeseiten eine Deformation in Gestalt von Faltstreifen aufweisen, zu deren Bildung die Ränder an den Gefügeseiten geknickt, umgeschlagen oder breitgequetscht sind und die eine Auflage des Verpackungsmaterials auf einem zu verpackenden Gegenstand bilden. Die Bildung der Faltstreifen bedeutet, dass die Ränder an den Gefügeseiten zumindest abschnittsweise und vorzugsweise in verschiedene Richtungen geknickt oder umgeschlagen oder breitgequetscht sind. Vorteilhafterweise bilden die Faltstreifen an mindestens einer der Gefügeseiten eine vergrößerte Auflagefläche des Verpackungsmaterials, so dass Auflagekräfte besser verteilt werden. Die Einwirkung scharfkantiger Ränder auf eine gegebenenfalls empfindliche Oberfläche des verpackten Gegenstands wird vermieden.

Gemäß einer weiteren vorteilhaften Ausführungsform der Erfindung können die Zellenwände der Zellen eine funktionale Beschichtung aufweisen. Der Begriff "funktionale Beschichtung" bezieht sich allgemein auf eine Beschichtung des Zellengefüges, insbesondere der inneren Zellenwände des Zellengefüges, mit einem Beschichtungsmaterial, welches dem Verpackungsmaterial neben der Elastizität eine weitere Gebrauchseigenschaft verleiht. Der Auftrag der Beschichtung kann auf dem Vorläufer-Zellengefüge (oder dessen Vorläufermaterial) und/oder auf dem deformierten Zellengefüge erfolgen, z. B. durch Tauch- oder Sprühauftrag. Besonders bevorzugt kann die funktionale Beschichtung ein Pigment, ein Korrosionsschutzmittel, eine Oberflächenvergütung und/oder ein Feuchteschutzmittel, insbesondere einen Feuchteabsorber, umfassen.

Mit dem Pigment (Farbstoff) kann das Verpackungsmaterial zum Beispiel lokal oder flächig markiert werden. Das Korrosionsschutzmittel kann zum Beispiel flüchtige Substanzen freisetzen, die einen Korrosionsschutz für den verpackten Gegenstand bewirken. Die Oberflächenvergütung kann eine Beschichtung zur Bildung einer weichen Oberfläche umfassen, zum Beispiel durch eine Bindung von Fasern an der Oberfläche. Damit kann eine Beschädigung von z. B. lackiertem Packgut, Packgut mit einer weichen Oberfläche und/oder Packgut mit einer nicht vollständig ausgehärteten Lackierung vermieden wird. Die Oberflächenvergütung kann alternativ oder zusätzlich einen rutschhemmenden Effekt haben. Durch die Oberflächenvergütung kann das Verpackungsmaterial weniger abrasiv wirken als Wellpappe. Mit dem Feuchteschutzmittel kann beispielsweise Feuchte aus der Umgebung des verpackten Gegenstandes aufgenommen werden.

Da das deformierte Zellengefüge des erfindungsgemäßen Verpackungsmaterials mindestens einseitig offen ist, kann, anders als bei der geschlossenen Sandwichplatte gemäß Figur 9, die innere Struktur des Zellengefüges für die weitere Gebrauchseigenschaft genutzt werden.

Gemäß einer weiteren vorteilhaften Ausführungsform des Verpackungsmaterials kann mindestens eine Teilgruppe der Zellen, d.h. ein Teil der Zellen oder alle Zellen, ungefüllt (hohl, leer) sein. Die ungefüllten deformierten Zellen enthalten lediglich die Umgebungsatmosphäre, wie zum Beispiel Luft oder ein Inert- oder Schutzgas, in dem die Verpackung erfolgt. Die Bereitstellung der ungefüllten Zellen hat den Vorteil, dass beim Auftreten äußerer Stöße Raum zur Aufnahme deformierter Teile des Zellengefüges bereitgestellt wird.

Alternativ oder zusätzlich kann mindestens eine Teilgruppe der Zellen, d.h. ein Teil der Zellen oder alle Zellen, mit einem Füllmaterial, insbesondere einem Schaummaterial, wie z. B. einem Polymerschaum, gefüllt sein. Für die Elastizität des Verpackungsmaterials kann es von Vorteil sein, wenn das Füllmaterial in den Zellen jeweils mit den Zellenwänden der Zellen nicht fest verbunden ist. Mit dem Füllmaterial können vorteilhafterweise Weise mechanische Eigenschaften des Verpackungsmaterials, insbesondere seine Dämpfungswirkung bei Deformation und/oder Härte gezielt beeinflusst werden. Die Verteilung von Füllmaterial in lokal abgegrenzten Bereichen in der flächigen Ausdehnung oder flächig über die gesamte Ausdehnung des Verpackungsmaterials kann beispielsweise in Abhängigkeit von den konkreten Anwendungsbedingungen des Verpackungsmaterials, insbesondere in Abhängigkeit von der Gestalt des zu verpackenden Gegenstandes oder der Lage besonders empfindlicher Bauteile von diesem, gewählt werden.

Eine gezielte, lokale Änderung (oder flächige Einstellung) der Polstereigenschaft, insbesondere der Dämpfungswirkung und/oder der Härte kann alternativ durch die oben genannte Bereitstellung von Zellen verschiedener Zellgrößen im Zellengefüge erreicht werden. Kleinere Zellen ergeben eine größere Härte des Verpackungsmaterials.

In Bezug auf Ausführungsformen des Verfahrens zur Herstellung eines Verpackungsmaterials können ein Auftragen einer funktionalen Beschichtung auf mindestens eine Teilgruppe der Zellen, vorzugsweise des undeformierten Vorläufer-Zellengefüges, mit dem Pigment, dem Korrosionsschutzmittel, der Oberflächenvergütung und/oder dem Feuchteschutzmittel, und/oder ein Füllen mindestens einer Teilgruppe der Zellen, vorzugsweise des undeformierten Vorläufer-Zellengefüges, mit dem Füllmaterial vorgesehen sein.

Gemäß einer weiteren vorteilhaften Ausführungsform der Erfindung können die Zellenwände der Zellen des deformierten Zellengefüges ein blattförmiges Wandmaterial umfassen, wobei die Zellenwände benachbarter Zellen über ein Fügemittel, wie z. B. mit einem Leim, verbunden sind. Besonders bevorzugt ist das Zellengefüge aus einem einzigen Wandmaterial, wie zum Beispiel einem Papiermaterial, insbesondere Papier, Pappe und/oder Karton, oder einem Kunststoffmaterial, insbesondere Polypropylen (PP) gebildet. Die Verwendung des blattförmigen Wandmaterials hat den Vorteil, dass die Masse des Verpackungsmaterials relativ gering gehalten werden kann. Außerdem begünstigt das blattförmige Wandmaterial die Deformation des undeformierten Vorläufer-Zellengefüges bei der Herstellung des Verpackungsmaterials.

Ein weiterer Vorteil der Erfindung besteht darin, dass geometrische Eigenschaften des Wandmaterials der Zellen insbesondere in Abhängigkeit von den konkreten Anwendungsbedingungen in einem weiten Bereich gewählt werden können. So kann das Wandmaterial beispielsweise eine Grammatur im Bereich 80 g/m² bis 150 g/m², z. B. 110 g/m² bis 130 g/m²aufweisen. Des Weiteren ist vorteilhafterweise eine Variabilität in Bezug auf die Größe der Zellen gegeben. Beispielsweise kann das Zellengefüge eine deformierte Zellenstruktur umfassen, deren Zellen als Vorläufermaterial im undeformierten Zustand eine Querschnittsdimension, wie zum Beispiel einen Abstand gegenüberliegender Zellenwände, im Bereich von 5 mm bis 50 mm aufweisen. Mit diesem Größenbereich können sich Vorteile z. B. insbesondere für die Anwendung als Verpackungsmaterial oder als Bau- oder Isolationsmaterial oder als Möbelpolstermaterial ergeben. Untersuchungen der Erfinder haben ergeben, dass bei geringeren Dimensionen die Härte des Materials übermäßig zunehmen kann und dass bei größeren Dimensionen das Verpackungsmaterial zu weich werden kann oder einwirkende Kräfte leichter ungehindert durchschlagen können.

Innerhalb der flächigen Ausdehnung des Verpackungsmaterials können die Zellen in verschiedenen Teilbereichen des Zellengefüges verschiedene Querschnittsdimensionen haben. Beispielsweise können bei der Verwendung des Verpackungsmaterials als Matratze verschiedene Matratzenteile durch die Wahl verschiedener Querschnittsdimensionen der Zellen und/oder durch die Wahl verschiedener Dicken der Wandmaterialien verschiedene Härten oder Dämpfungen aufweisen.

Vorzugsweise zeichnet sich das deformierte Zellengefüge des Verpackungsmaterials durch eine in Normalrichtung zwischen beiden Gefügeseiten durchgehende Deformation aus, d.h. vorzugsweise sind die Zellenwände entlang der gesamten Dicke von einer bis zur anderen Gefügeseite durchgehend deformiert. Damit wird vorteilhafterweise erreicht, dass das gesamte Material des deformierten Zellengefüges zur Schaffung der elastischen Eigenschaften des Verpackungsmaterials ausgenutzt wird.

Gemäß einer alternativen, vorteilhaften Ausführungsform der Erfindung (Hybrid-Polster) kann das deformierte Zellengefüge eine Schichtstruktur aufweisen, die eine erste Schicht mit einer Zellengefügestruktur eines undeformierten Vorläufer-Zellengefüges und eine zweite Schicht mit einer Zellengefügestruktur des deformierten Zellengefüges umfasst. In Bezug auf Ausführungsformen des Verfahrens zur Herstellung eines Verpackungsmaterials kann das deformierte Zellengefüge mit einer Schichtstruktur gebildet werden, die eine erste Schicht mit einer Zellengefügestruktur des undeformierten Vorläufer-Zellengefüges und eine zweite Schicht mit einer Zellengefügestruktur des deformierten Zellengefüges umfasst, indem das Pressen des Vorläufer-Zellengefüges mit der Pressvorrichtung beendet wird, sobald das undeformierte Vorläufer-Zellengefüge in der zweiten Schicht in die deformierte Zellengefügestruktur kollabiert ist.

Bei den Ausführungsformen mit der Schichtstruktur des deformierten Zellengefüges sind die Zellen vorteilhafterweise nur teilweise kollabiert. Der Erfinder hat festgestellt, dass insbesondere bei Verwendung einer Walzen- oder Plattenpresse eine Deformation mit einer ebenen Deformationsfront umfasst, die sich von einer Gefügeseite zur anderen Gefügeseite in Normalrichtung verschiebt. Durch Unterbrechung des Pressens, bevor die Deformationsfront die zweite Gefügeseite erreicht, kann die genannte Schichtstruktur mit der ersten Schicht mit undeformierten Zellen und der zweiten Schicht mit deformierten Zellen gebildet werden. Die Schaffung der Schichtstruktur hat den Vorteil, dass durch die reproduzierbar einstellbare Dicke der zweiten Schicht des deformierten Zellengefüges die Dämpfungseigenschaften des Verpackungsmaterials mit hoher Genauigkeit eingestellt werden können, während zugleich mit der ersten Schicht des undeformierten Vorläufer-Zellengefüges dem Verpackungsmaterial eine Steifigkeit verliehen wird, die z. B. für die Verpackungsanwendung von Vorteil sein kann.

Vorteilhafterweise kann eine Dicke des Zellengefüges des erfindungsgemäßen Verpackungsmaterials in Normalrichtung im Bereich von zum Beispiel 5 mm bis 130 mm gewählt sein. Eine Dicke des Zellengefüges kann bevorzugt im Bereich 5 mm bis 40 mm gewählt sein, wenn das Zellengefüge des Verpackungsmaterials über seine gesamte Dicke kollabiert ist. Eine größere Dicke kann insbesondere vorgesehen sein, wenn das Zellengefüge des Verpackungsmaterials das Hybrid-Polster bildet.

Gemäß einer besonders vorteilhaften Ausführungsform der Erfindung kann das Zellengefüge an beiden Gefügeseiten, vollständig oder in mindestens einem flächigen Oberflächenabschnitt, offen sein und die Ränder der Zellenwände der Zellen können zu beiden Gefügeseiten hin freiliegen. Bei dieser Ausführungsform kann das Vorläufermaterial der Herstellung des Verpackungsmaterials vorzugsweise frei von Deckschichten sein. Von Vorteil kann bei dieser Ausführungsform insbesondere sein, dass das Verpackungsmaterial eine besonders ausgeprägte Fähigkeit zur Formanpassung an zu verpackende oder zu polsternde Gegenstände hat.

Vorzugsweise kann die Pressvorrichtung eine Walzenpresse umfassen, wobei die Bildung des deformierten Zellengefüges durch Förderung des Vorläufer-Zellengefüges durch die Walzenpresse erfolgt. Die Walzenpresse kann mindestens eine Walzenstation, vorzugsweise mit einem Walzenpaar oder alternativ mit einer Kombination aus einer Walze und einem Walzentisch, umfassen, durch die das Zellengefüge hindurchgefördert wird und dabei kollabiert. Die Walzen haben vorzugsweise eine zylinderförmige Oberfläche. Die Oberfläche mindestens einer der Walzen kann angeraut sein, so dass vorteilhafterweise ein Eingriff zwischen dem Vorläufermaterial und der Walze verbessert wird. Alternativ oder zusätzlich kann die Oberfläche mindestens einer der Walzen Längsrillen in Umfangsrichtung aufweisen, wobei die Längsrillen insbesondere ein welliges Tiefenprofil entlang der Umfangsrichtung haben können. Vorteilhafterweise ermöglichen die Längsrillen, eine weichere Oberfläche des Verpackungsmaterials zu erzielen.

Die Pressung mit der Walzenpresse erfolgt durch das Auftreffen der Walze auf dem Zellengefüge. Die Walzenpresse bietet Vorteile in Bezug auf die Herstellung des Verpackungsmaterials als Endlosprozess und die Wirtschaftlichkeit der Herstellung des Verpackungsmaterials. Die Walzenpressung ist mit einem relativ geringen Energiebedarf verbunden. Aufgrund der relativ kleinen Bearbeitungsfläche, an der die Walze das Zellengefüge berührt, kann bei vorgegebener Presskraft ein höherer Druck erzeugt werden als bei einer flächig wirkenden Presse.

Der Abstand zwischen den Walzen eines Walzenpaares oder zwischen einer Walze und einem Walzentisch ist enger gestellt als die Dicke des Vorläufermaterials, wodurch ein Presshub geschaffen wird. Mit der Walzenpresse erfolgt ein Zusammenpressen des Zellengefüges bis zu einer Kompressionsdicke, die geringer ist als die Dicke des fertigen Verpackungsmaterials in Normalrichtung. Nach dem Pressen erfolgt eine Entspannung des Zellengefüges, so dass sich die Dicke des fertigen Verpackungsmaterials einstellt. Der Abstand der Walzen liefert eine Kompressionsdicke, die z. B. bis zu 1/10 der Dicke des zugeführten Materials, insbesondere des Vorläufermaterials, beträgt. Diese Kompressionsdicke kann vorzugsweise mit einer einzigen Walzenstation eingestellt werden, wenn das Vorläufermaterial eine Dicke gleich oder kleiner 20 mm hat. Bei Vorläufermaterial mit einer größeren Dicke können eine größere Kompressionsdicke, die z. B. bis zu 1/... der Dicke des zugeführten Materials, insbesondere des Vorläufermaterials, beträgt und/oder ein Pressen an mehreren Walzenstationen vorgesehen sein (siehe unten).

Wenn an einer einzelnen Walzenstation der Presshub vergrößert wird und entsprechend der Auftreffwinkel der Walze auf dem Zellengefüge wächst, kann es passieren, dass die Zellwände mehrheitlich in nur eine Richtung knicken. Daher kann eine Walzenpresse mit einer einzigen Walzenstation bevorzugt verwendet werden, wenn ein relativ geringer Presshub erzeugt werden soll und/oder das Knicken der Zellwände in nur einer Richtung für eine Anwendung des Verpackungsmaterials akzeptabel ist.

Gemäß einer besonders bevorzugten Variante kann die Walzenpresse jedoch zwei oder mehr in Förderrichtung nacheinander angeordnete Walzenstationen umfassen, an denen die Bildung des deformierten Zellengefüges stufenweise erfolgt. Die Walzenstationen werden sequentiell betrieben und jede Walzenstation liefert einen Teil des gewünschten Presshubs zum Kollabieren des Zellengefüges. Die Verwendung von zwei oder mehr Walzenstationen hat den Vorteil, dass schrittweise ein relativ großer Presshub erreicht werden kann, ohne dass die Zellwände mehrheitlich in nur eine Richtung knicken, da an jeder Walzenstation ein kleinerer (Teil-)Presshub mit einem ausreichend kleinen Auftreffwinkel der Walze auf dem Zellengefüge erzeugt wird, so dass die Zellwände jeweils in verschiedene Richtungen knicken.

Mindestens eine der Walzenstationen kann so konfiguriert sein, dass über die Breite des Verpackungsmaterials (d. h. senkrecht zur Förderrichtung durch die Walzenpresse) ein veränderlicher Presshub bereitgestellt wird. Der veränderliche Presshub kann beispielsweise eingestellt werden, indem Walzenachsen relativ zueinander nicht parallel verlaufen, sondern einen Winkel > 0 einschließen, und/oder indem eine gestufte Walze mit verschiedenen Durchmessern in axialer Richtung verwendet wird. Insbesondere mit der gestuften Walze kann im Verpackungsmaterial ein Versatz, umfassend Materialabschnitte mit verschiedenen Dicken, gebildet werden. Beispielsweise können dünnere Materialabschnitte für eine Polsterung optimiert sein und dickere Materialabschnitte zur Bildung eines Hybrid-Polsters und/oder zur Schaffung von Anlagekanten vorgesehen sein können. Alternativ oder zusätzlich kann mindestens eine Walze einer Walzenstation eine vorstehende Oberflächenstruktur Prägekontur aufweisen, die beim Walzen dem Verpackungsmaterial aufgeprägt wird, z. B. zur Bildung von mindestens einem Gefach an einer Verpackung.

Alternativ oder zusätzlich kann die Pressvorrichtung eine Plattenpresse umfassen, wobei die Bildung des deformierten Zellengefüges durch eine flächige Ausübung mit der Presskraft auf die Gefügeseiten des Vorläufer-Zellengefüges erfolgt. Die Plattenpresse umfasst zwei Pressplatten mit vorzugsweise ebenen Oberflächen, die besonders bevorzugt parallel zueinander angeordnet sind.

Alternativ können auch die Pressplatten vorstehende Prägekonturen aufweisen, die beim Pressen dem Verpackungsmaterial aufgeprägt werden, z. B. zur Bildung von dem mindestens einen Gefach an einer Verpackung. Alternativ oder zusätzlich können die Pressplatten relativ zueinander mit einem Winkel, insbesondere mit einem spitzen Winkel, angeordnet werden, so dass das Verpackungsmaterial mit einem Dickengradienten hergestellt werden kann. Alternativ oder zusätzlich kann mindestens eine der Pressplatten eine Stufenplatte umfassen, mit der wie mit der gestuften Walze im Verpackungsmaterial Materialabschnitte mit verschiedenen Dicken gebildet werden können.

Die Presskraft der Plattenpresse wird flächig auf die Gefügeseiten des undeformierten Vorläufer-Zellengefüges ausgeübt. Die Verwendung der Plattenpresse kann Vorteile hinsichtlich der Homogenität der Elastizität des Verpackungsmaterials entlang seiner flächigen Ausdehnung bieten. Alternativ oder zusätzlich umfasst die Pressvorrichtung eine Walzenpresse. Mit der Plattenpresse erfolgt ein Zusammenpressen des Zellengefüges bis zu einer Kompressionsdicke, die geringer als die Dicke des fertigen Verpackungsmaterials ist in Normalrichtung. Nach dem Pressen erfolgt ein Entspannen des Zellengefüges, so dass sich die Dicke des fertigen Verpackungsmaterials einstellt. Das Verhältnis der Kompressionsdicke zu der Dicke des fertigen Verpackungsmaterials kann z. B. im Bereich 1/10 bis 8/10 liegen

Die Herstellung des undeformierten Vorläufer-Zellengefüges kann z. B. die Schritte umfassen: Bereitstellung von zwei Wandmaterialbahnen, Auftrag einer ersten Gruppe paralleler Streifen eines Fügemittels auf eine der Wandmaterialbahnen, Verbindung der Wandmaterialbahnen über die erste Gruppe paralleler Streifen des Fügemittels, Auftrag einer zweiten Gruppe paralleler Streifen des Fügemittels auf die andere der Wandmaterialbahnen, wobei die zweite Gruppe paralleler Streifen des Fügemittels relativ zu der ersten Gruppe paralleler Streifen des Fügemittels parallel und versetzt angeordnet ist, Schneiden der verbundenen Materialbahnen in Wandmaterialstreifen entlang Schnittlinien senkrecht zur Ausrichtung der Streifen des Fügemittels, Bildung eines Stapels von Wandmaterialstreifen, wobei die im Stapel benachbarten Wandmaterialstreifen über die zweite Gruppe paralleler Streifen des Fügemittels verbunden werden, und Auseinanderziehen des Stapels von Wandmaterialstreifen, so dass das Zellengefüge mit den Zellen gebildet wird.

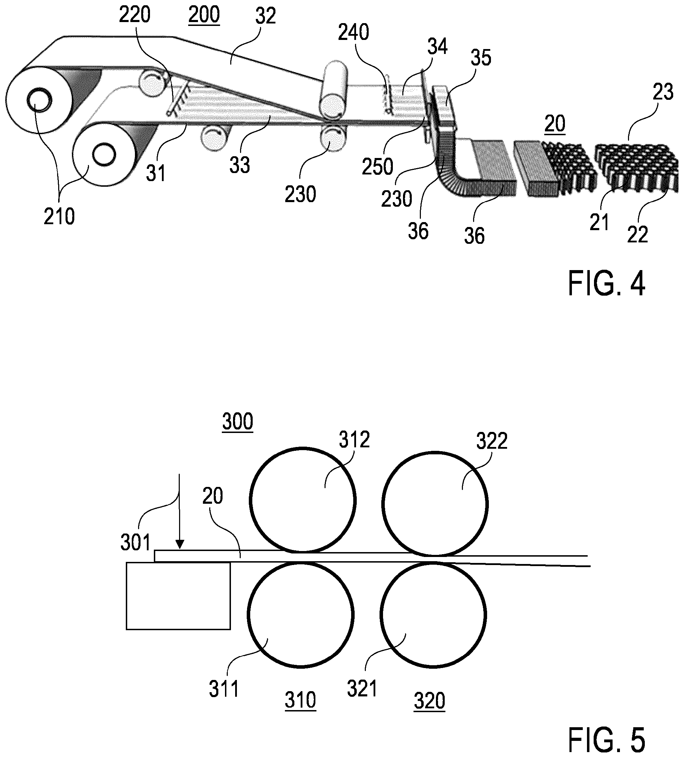

Dieses, bevorzugt mit einer Klebevorrichtung gemäß Figur 4 ausgeführte, Verfahren hat Vorteile für die Herstellung des Vorläufer-Zellengefüges aus besonders dünnem Wandmaterial der Zellen und/oder mit einem besonders hohen Aspektverhältnis (Verhältnis Dicke des Vorläufer-Zellengefüges zu Querschnittsdimension der Zellen) des Vorläufer-Zellengefüges bei der Erzielung einer hohen Elastizität des Verpackungsmaterials. Alternativ kann das Vorläufer-Zellengefüge mit einem anderen Verfahren hergestellt werden, z. B. indem zunächst die Zellen einzeln geformt und anschließend zum Vorläufer-Zellengefüge verbunden werden.

Weitere Vorteile und Einzelheiten der Erfindung werden im Folgenden unter Bezug auf die beigefügten Zeichnungen beschrieben. Es zeigen:
- Figur 1:: eine schematische Illustration eines deformierten Zellengefüges von Verpackungsmaterial gemäß Ausführungsformen der Erfindung;
- Figur 2:: eine fotografische Draufsicht auf Ausführungsformen des erfindungsgemäßen Verpackungsmaterials mit verschiedenen Dimensionen der Zellen;
- Figur 3:: eine Draufsicht auf ein undeformiertes Vorläufermaterial, dass gemäß weiteren Ausführungsformen der Erfindung zumindest teilweise mit einem Füllmaterial gefüllt ist und/ oder eine Beschichtung trägt;
- Figur 4:: eine Ausführungsform eines Verfahrens zur Herstellung eines undeformierten Vorläufer-Zellengefüges;
- Figur 5:: eine schematische Illustration des Pressens des Zellengefüges mit einer Walzenpresse;
- Figur 6:: eine schematische Illustration des Pressens des Zellengefüges mit einer Plattenpresse;
- Figur 7:: fotografische Abbildungen mit einer Illustration der Herstellung des Verpackungsmaterials mit der Plattenpresse;
- Figur 8:: eine schematische Illustration eines deformierten Zellengefüges eines Hybrid-Verpackungsmaterials gemäß Ausführungsformen der Erfindung; und
- Figur 9:: eine schematische Perspektivansicht eines herkömmlichen Verpackungsmaterials (Stand der Technik).

Merkmale bevorzugter Ausführungsformen der Erfindung werden im Folgenden unter beispielhaftem Bezug auf ein Verpackungsmaterial beschrieben, dessen deformierten Zellen aus Zellen gebildet sind, die im undeformierten Zustand die hexagonale Form von Wabenzellen haben. Es wird betont, dass die Umsetzung der Erfindung nicht auf die Wabenzellen-Struktur beschränkt, sondern entsprechend mit anderen Zellenstrukturen möglich ist. Des Weiteren wird betont, dass das erfindungsgemäßen Verpackungsmaterial nicht auf die Herstellung mit dem unter Bezug auf die Figuren 4 bis 6 beschriebenen Verfahren beschränkt ist. Vielmehr kann alternativ das undeformierte Vorläufer-Zellengefüge mit einem anderen Verfahren hergestellt werden, als in Figur 4 gezeigt ist, und es kann z. B. anstelle der gezeigten Walzen- und Plattenpressen eine Presse von einem anderen Typ verwendet werden. Schließlich wird betont, dass die Anwendung der Erfindung nicht auf Papier-basierte Zellengefüge beschränkt ist, sondern entsprechend auch mit Kunststoffbasierten Zellengefügen möglich ist. Eigenschaften des Verpackungsmaterials und seiner Verwendung, wie zum Beispiel die Wahl eines geeigneten Materials oder Zuschnitts, werden nicht beschrieben, soweit diese von herkömmlichen Verpackungsmaterialien bekannt sind.

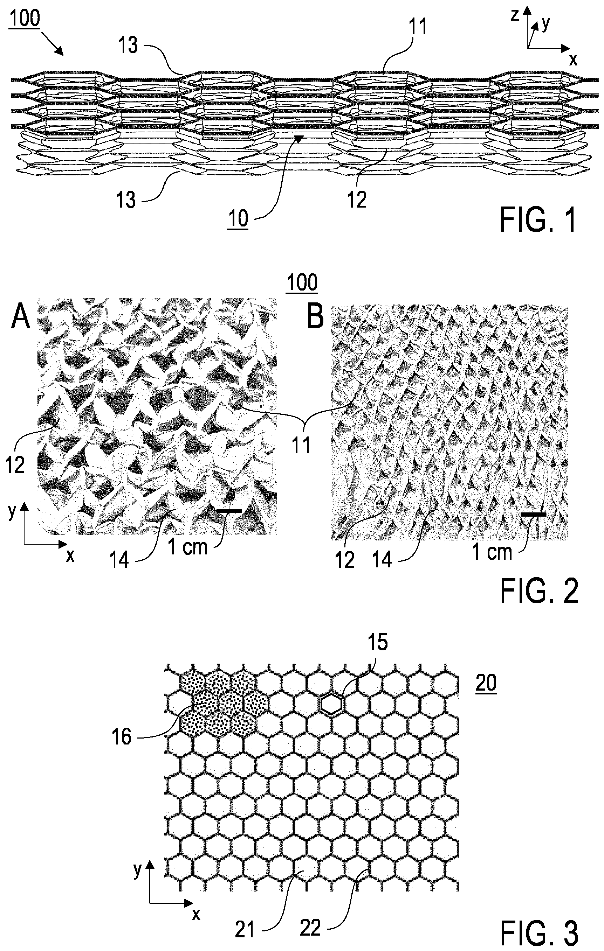

Es wird betont, dass insbesondere die Figuren 1, 3, 6 und 8 schematische Darstellungen sind, welche die Zellen in regelmäßiger Anordnung zeigen. In der Praxis bewirkt das Pressen des undeformierten Vorläufer-Zellengefüges ein unregelmäßiges Quetschen, wie zum Beispiel in den fotografischen Darstellungen von Figur 2 erkennbar ist. Die unregelmäßige Anordnung gequetschter Zellen wird in den Figuren 1 und 5 aus Übersichtlichkeitsgründen nicht dargestellt.

Figur 1 illustriert in schematischer Perspektivansicht einen Ausschnitt eines Verpackungsmaterials 100 mit einem Zellengefüge 10, das mit einer flächigen Ausdehnung in einer x-y-Ebene gezeigt ist. Das Zellengefüge 10 setzt sich aus einer Vielzahl von Zellen 11 jeweils mit einer umlaufenden Zellenwand 12 zusammen. Das Zellengefüge 10 ist an beiden Gefügeseiten 13 über seine gesamte Ausdehnung oder in mindestens einem Oberflächenabschnitt offen, d.h. die Zellen 11 sind nicht mit einer Deckschicht fest verbunden.

Das Verpackungsmaterial 100 kann in Abhängigkeit von seiner konkreten Verwendung mit einer teilweisen (z. B. auf eine Gefügeseite beschränkten) oder vollständigen Umhüllung (insbesondere Hüllschicht aus einem Textilmaterial oder einem Kunststoffmaterial, z. B. Stretch- oder Skinfolie) versehen sein, die allerdings vor Herstellung des Verpackungsmaterials 100 entlang der Ausdehnung der Gefügeseiten 13 nicht mit dem Zellengefüge fest und stofflich verbunden ist. Beispielsweise kann das Verpackungsmaterial mit einer Skinfolie versehen oder speziell bei der Verwendung als Matratze mit einer textilen Hülle ausgestattet werden, die das Verpackungsmaterial 100 aufnimmt.

Das Wandmaterial der Zellen 11 ist zum Beispiel aus Papier, wie zum Beispiel Papier der Sorte Testliner, Kraftliner, oder Wellenstoff mit einer Grammatur von 120 g/m² hergestellt. In Abhängigkeit vom Verfahren zur Herstellung des Zellengefüges 10 können alle Trennwände 12 einlagig gebildet sein, oder es können jeweils zwei gegenüberliegende Zellenwände 12 zweilagig sein, oder es können alle Zellenwände 12 zweilagig sein.

Wie in Figur 1 schematisch illustriert, ist das Zellengefüges 10 in Normalrichtung (z-Richtung) deformiert. Die Zellenwände 12 sind unregelmäßig gekrümmt, zum Beispiel mehrfach gefaltet, gebogen und/oder geknickt. In der Normalrichtung wird damit ein Materialgefüge bereitgestellt, das bei Einwirkung einer Kraft in der Normalrichtung elastisch deformierbar ist.

Die Figuren 2A und 2B zeigen fotografische Draufsichten auf das Verpackungsmaterial 100, zum Beispiel gemäß Figur 1, wobei die durch Pressen herstellungsbedingt erzeugte Unregelmäßigkeit der Deformation, d.h. insbesondere das Knicken der Zellenwände 12 in verschiedene Richtungen und mit verschiedenen Formen, erkennbar ist. Es zeigt sich, dass die zu den Gefügeseiten weisenden Ränder der Zellenwände 12 zu schmalen Faltstreifen 14 umgeknickt sind, die eine Auflage des Verpackungsmaterials 100 auf einem zu verpackenden Gegenstand oder eine Verwendung des Verpackungsmaterials 100 als Matratze begünstigen oder bei Packgut vermeiden, dass eine abrasive Schnittkante direkt auf das Packgut einwirken kann. Die Figuren 2A und 2B verdeutlichen des Weiteren beispielhaft, dass die Zellen 11 mit verschiedenen Größen herstellbar sind (siehe 1 cm-Längenskala).

Die Zellen 11 des Verpackungsmaterials 100 können ungefüllt und unbehandelt sein. Alternativ können, wie in Figur 3 schematisch gezeigt ist, die Zellen 11 eine Beschichtung 15 tragen und/oder mit einem Füllmaterial 16 gefüllt sein.

Figur 3 zeigt eine Draufsicht auf ein undeformiertes Zellengefüge 20 mit undeformierten Zellen 21, die jeweils eine undeformierte Zellenwand 22 aufweisen, wie es bei der Herstellung des Verpackungsmaterials bereitgestellt wird (siehe unten). Vorteilhafterweise sind Beschichtungsmaterialien, zum Beispiel auf der Basis wässriger oder organischer Lösungsmittel, bekannt, die eine ausreichende Haftung auf den Zellenwänden 22 auch während der Deformation des Zellengefüges bei der Herstellung des Verpackungsmaterials 100 aufweisen. Des Weiteren wird das Füllmaterial vorteilhafterweise im deformierten Zellengefüge aufgrund der unregelmäßigen Krümmung der dann deformierten Zellenwände 12 sicher in den deformierten Zellen 11 (Figur 1) gehalten.

Die beispielhaft schematisch gezeigte Beschichtung 15 ist auf den Innenseiten der Zellenwände 12 im Inneren der Zellen 11 vorgesehen. Beispielsweise kann die gesamte Zellenwand 12 einer Zellenzelle 11 vollständig oder teilweise beschichtet sein. Der Auftrag der Beschichtung 15 kann mit einem an sich bekannten Auftragsverfahren, wie zum Beispiel Sprühauftrag oder Pinselauftrag, erfolgen. Die Beschichtung 15 kann in allen Zellen 11 des zur Herstellung des Verpackungsmaterials bereitgestellten undeformierten Zellengefüges 20 vorgesehen sein. Alternativ wird nur ein Teil der Zellen 11 beschichtet. Die Beschichtung 15 umfasst zum Beispiel ein VCI (volatile corrosion inhibitor)- oder ICB-(intelligent corrosion blocker)-Korrosionsschutzmittel.

Das Füllmaterial 16 kann einen Schaum, wie zum Beispiel Polyurethan- oder Polyethylen-Schaum, umfassen, der im undeformierten Zellengefüge 20 in die Zellen 11 eingefüllt, zum Beispiel eingesprüht, wird. Vorzugsweise wird ein Füllmaterial 16 verwendet, welches mit den Zellenwänden 12 keine Verbindung eingeht, so dass die Deformation des Zellengefüges 20 zur Herstellung des Verpackungsmaterials 100 nicht behindert wird.

In den Figuren 4 bis 8 sind weitere Merkmale bevorzugter Ausführungsformen des Verpackungsmaterials 100 und Merkmale bevorzugter Ausführungsformen des Verfahrens zur Herstellung des Verpackungsmaterials 100 mit einem deformierten, mindestens einseitig offenen Zellengefüge schematisch illustriert. In einem ersten Schritt wird ein undeformiertes Vorläufer-Zellengefüges 20 mit der in Figur 4 gezeigten Klebevorrichtung 200 hergestellt. In einem zweiten Schritt wird durch Pressen mit einer Pressvorrichtung 300 gemäß den Figuren 5 bis 7 aus dem undeformierten Vorläufer-Zellengefüge das deformierte Zellengefüge 10 des Verpackungsmaterials 100 gebildet.

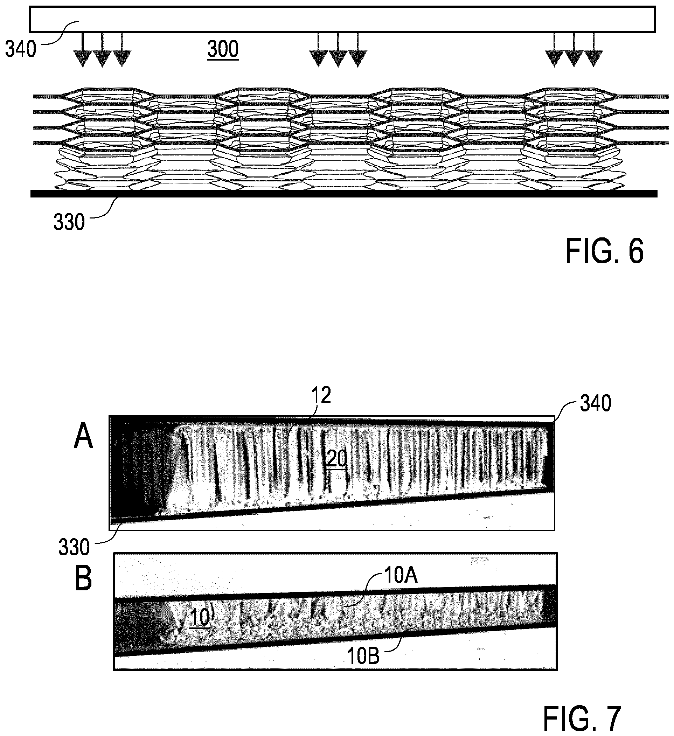

Beispielhaft wird auf eine kontinuierliche Herstellung des undeformierten Vorläufer-Zellengefüges 20 Bezug genommen, wobei Ausgangsmaterialien laufend von Vorratsrollen 210 geliefert werden. Die Erfindung ist nicht auf die Anwendung des kontinuierlichen Verfahrens beschränkt. Alternativ kann, insbesondere mit einer Plattenpresse gemäß den Figuren 6 und 7, eine diskontinuierliche Herstellung des undeformierten Vorläufer-Zellengefüges 20 aus vorab zugeschnittenen Materialbahnen vorgesehen sein.

Im Einzelnen erfolgt die Herstellung des undeformierten Vorläufer-Zellengefüges 20 gemäß Figur 4 mit den folgenden Teilschritten. Es werden zwei Materialbahnen 31, 32 von den Vorratsrollen 210 der Klebevorrichtung 200 abgewickelt und parallel geführt. Auf eine der Materialbahnen (31) werden auf deren zu der anderen der Materialbahnen (32) weisenden Oberfläche parallele Streifen 33 eines Klebstoffs aufgetragen. Der Auftrag erfolgt beispielsweise mit einer Reihe von Klebstoffdispensern 220, die mit einem Klebstoffvorrat (nicht gezeigt) verbunden sind. Die Streifen 33 erstrecken sich parallel zur Bewegungsrichtung der Materialbahnen 31, 32 und sind so dimensioniert, dass ihre Breite im Wesentlichen gleich ihrem Abstand ist. An einer Walzenstation 230 werden die zueinander weisenden Oberflächen der Materialbahnen 31, 32 entlang der Streifen 33 miteinander verklebt. Anschließend erfolgt auf der freien Oberfläche von einer der Materialbahnen (hier: die obere Materialbahn 32) der Auftrag einer weiteren Gruppe paralleler Streifen 34 des Klebstoffs. Die Streifen 34 erstrecken sich ebenfalls entlang der Bewegungsrichtung der Materialbahnen 32, 33, und der Auftrag erfolgt mit Klebstoffdispensern 240, wobei diese so dimensioniert und angeordnet sind, dass die Streifen 34 relativ zu den Streifen 33 versetzt angeordnet sind. Die Streifen 34 haben die gleiche Breite wie die Streifen 33 und die gleichen Abstände wie die Streifen 33, und sie werden so aufgetragen, dass sich die Streifen 34 über den Abständen zwischen den Streifen 33 befinden.

Anschließend werden die Materialbahnen 31, 32 an einer Schneidestation 250 in Wandmaterialstreifen 35 geschnitten und in einem Schacht 260 übereinandergestapelt. Jeder Wandmaterialstreifen 35 berührt an seiner Unterseite die mit den Streifen 34 des Klebstoffs versehene Oberfläche des darunterliegenden, mit den Streifen 34 des Klebstoffs versehenen Wandmaterialstreifens. Aufgrund des Eigengewichts oder durch eine zusätzliche Presse werden die Wandmaterialstreifen 35 im Schacht verklebt, so dass ein verklebter Stapel 36 von Wandmaterialstreifen gebildet wird.

Danach wird der verklebte Stapel 36 umgelenkt und mit mechanischen Mitteln auseinandergezogen und anschließend expandiert, so dass sich das gewünschte undeformierte Vorläufer-Zellengefüge 20 mit durch Zellenwände 22 getrennten Zellen 21 mit Wabenstruktur und offenen Gefügeseiten 23 ergibt und anschließend konfektioniert werden kann. Die Expansion erfolgt beispielsweise mit einer Rückhalteeinrichtung (Rechen) und einer Zugeinrichtung, um die Waben vollständig zu entfalten. Vorzugsweise wird das deformierte Vorläufer-Zellengefüge 20 als Endlosmaterial bereitgestellt oder auf die gewünschte Größe des fertigen Verpackungsmaterials zugeschnitten. Schließlich kann das undeformierte Vorläufer-Zellengefüge 20 einer Behandlung, wie zum Beispiel dem Auftrag einer Beschichtung und/oder der Einführung eines Füllmaterials, unterzogen werden, wie oben unter Bezug auf Figur 3 beschrieben ist.

In einem weiteren Schritt erfolgt die Deformation des zunächst undeformierten Vorläufer-Zellengefüges 20 mit einer Pressvorrichtung 300 in Gestalt einer Walzenpresse (Figur 5) oder einer Plattenpresse (Figuren 6/7).

Die Pressvorrichtung 300 in Gestalt einer Walzenpresse umfasst gemäß Figur 5 zum Beispiel zwei Walzenstationen 310, 320 jeweils mit einem Walzenpaar 311, 312 und 321, 322, z. B. mit einem Walzendurchmesser im Bereich von 300 mm bis 800 mm. Die Pressvorrichtung 300 umfasst in an sich bekannter Weise weitere Komponenten, wie zum Beispiel einen Walzenantrieb (nicht dargestellt) und Steuer- und Bedieneinrichtungen (nicht dargestellt).

Das zunächst undeformierte Vorläufer-Zellengefüge 20 wird unmittelbar vor der ersten Walzenstation 310 einer Expansion mit einem Rechen 301 aus einem biegsamen Material, z. B. aus Gummi, unterzogen, der in die Zellen des undeformierte Vorläufer-Zellengefüges 20 eingreift und diese gegen die Zugkraft des zwischen die Walzen gezogenen Materials temporär zurückhält, so dass das Vorläufer-Zellengefüge 20 in die Länge gestreckt wird, bis die Zellen vollständig expandiert sind. An der ersten Walzenstation 310 erfolgt eine Kompression des Vorläufer-Zellengefüges 20 z. B. von einer Dicke von 40 mm auf eine Kompressionsdicke von 22 mm. Anschließend erfolgt eine geringfügige Entspannung auf eine Dicke von 25 mm und an der zweiten Walzenstation 320 eine weitere Kompression des vorkomprimierten Zellengefüges von der Dicke von 25 mm auf eine Kompressionsdicke maximaler Kompression von 7 mm, wiederum mit einer nachfolgenden Entspannung auf 12 mm. Die Dickenangaben sind als Beispiele zu verstehen und können in Abhängigkeit von Betriebseigenschaften der Walzenstationen, insbesondere der Anzahl der Walzenstationen und dem Walzendurchmesser, variiert werden.

Die Pressvorrichtung 300 in Gestalt einer Plattenpresse umfasst gemäß den Figuren 6 und 7 eine untere Pressplatte 330 und eine obere Pressplatte 340 (schematisch gezeigt). Die Pressvorrichtung 300 umfasst des Weiteren in an sich bekannter Weise weitere Komponenten, wie zum Beispiel einen hydraulischen Pressenantrieb (nicht dargestellt) und Steuer- und Bedieneinrichtungen (nicht dargestellt).

Mit der Pressvorrichtung 300 wird das zunächst undeformierte Vorläufer-Zellengefüge durch Ausübung einer Presskraft (siehe Pfeile) in Normalrichtung zusammengedrückt. Der Prozess des Zusammendrückens ist mit den fotografischen Darstellungen in den Figuren 7A und 7B illustriert. Figur 7A zeigt perspektivisch die Seitenansicht des überwiegend noch undeformierten Zellengefüges 20 zwischen den Pressplatten 330, 340 zu Beginn des Pressvorgangs mit beginnender Deformation. Das Zellengefüge 20 ist noch überwiegend undeformiert, d.h. die Zellenwände 12 erstrecken sich noch gerade in Normalrichtung.

Bei Betrieb der Pressvorrichtung 300 wird der Abstand zwischen den Pressplatten 310, 320 verringert, wodurch die Presskraft auf das Zellengefüge ausgeübt wird. Der Erfinder hat festgestellt, dass das Zellengefüge überraschenderweise nicht stochastisch und über die gesamte Dicke des Zellengefüges gleichzeitig kollabiert, sondern die Deformation schichtförmig an einer der Pressplatten (hier: 330) beginnt und mit einer Deformationsfront durch das Zellengefüge läuft. Figur 7B zeigt, wie die untere Hälfte des Zellengefüges kollabiert und deformiert ist, während die obere Hälfte des Zellengefüges noch undeformiert ist.

Der Pressvorgang kann während der Schichtbildung unterbrochen werden, sodass das fertige deformierte Zellengefüge 10 eine erste Schicht 10A mit undeformierten Zellen 11 und eine zweite Schicht 10B mit deformierten Zellen 11 umfasst, wie schematisch in Figur 8 als Hybrid-Polster gezeigt ist. Alternativ kann der Pressvorgang fortgesetzt werden, bis das Zellengefüge 10 über die gesamte Dicke deformiert ist. Das Hybrid-Polster gemäß Figur 8 kann auch mit einer Walzenpresse gemäß Figur 5 gebildet werden, indem beispielsweise nur eine Walzenstation mit einem relativ geringen Presshub verwendet wird.

Bei der bevorzugten Verwendung des Verpackungsmaterials als Verpackungsmaterial wird das Verpackungsmaterial in einem Verpackungsbehälter angeordnet, um den verpackten Gegenstand zu schützen. Das Verpackungsmaterial kann alternativ als alleinige Verpackung verwendet werden, wobei es eine Umhüllung des verpackten Gegenstands bildet. Beispielsweise kann ein zerbrechlicher Gegenstand, wie eine Glasflasche, vom Verpackungsmaterial umhüllt und geschützt werden.

Bei einer alternativen Verwendung als Baumaterial kann das Verpackungsmaterials zum, Beispiel als elastische Füllung in hohlen Gebäudeteilen angeordnet sein. Als Möbelpolstermaterial, insbesondere als Matratze oder als Unterlage in einem Schrank oder Laborwagen, und/oder als Sportmaterial, insbesondere als Sportmatte, jeweils vorzugsweise mit einer Umhüllung, kann das Verpackungsmaterial ebenfalls verwendet werden. Die strukturierte Oberfläche des Verpackungsmaterials kann alternativ als Separator für Kleinstteile oder als schallabsorbierende Struktur in einem Dekorationsmaterial verwendet werden.

Die in der vorstehenden Beschreibung, den Zeichnungen und den Ansprüchen offenbart Merkmale der Erfindung können sowohl einzeln als auch in Kombination oder Unterkombination für die Verwirklichung der Erfindung in ihren verschiedenen Ausgestaltungen von Bedeutung sein.

## Patentansprüche

1. Verpackungsmaterial (100), umfassend
- ein Zellengefüge (10) mit einer flächigen Ausdehnung und mit einer Vielzahl von Zellen (11), insbesondere Wabenzellen, die jeweils eine umlaufende Zellenwand (12) aufweisen, die sich zwischen zwei Gefügeseiten (13) in einer Normalrichtung senkrecht zur flächigen Ausdehnung des Zellengefüges (10) erstreckt, wobei das Zellengefüge (10) eine derartige Deformation aufweist, dass die Zellenwände (12) der Zellen (11) entlang der Normalrichtung gekrümmt sind, wobei
- das Zellengefüge (10) vorzugsweise über seine gesamte Dicke deformiert ist,
**dadurch gekennzeichnet, dass**
- das Zellengefüge (10) an mindestens einer der Gefügeseiten (13) offen ist und Ränder der Zellenwände (12) der Zellen (11) zu der mindestens einen der Gefügeseiten (13) hin freiliegen.

2. Verpackungsmaterial gemäß Anspruch 1, bei dem
- die Zellenwände (12) der Zellen (11) an ihren freiliegenden Rändern an der mindestens einen der Gefügeseiten (13) eine Deformation in Gestalt von Faltstreifen (14) aufweisen, zu deren Bildung die Ränder an den Gefügeseiten geknickt, umgeschlagen oder breitgequetscht sind und die eine Auflage des Verpackungsmaterials (100) auf einem zu verpackenden Gegenstand bilden.

3. Verpackungsmaterial gemäß einem der vorhergehenden Ansprüche, bei dem
- die Zellenwände (12) der Zellen (11) eine funktionale Beschichtung (15) aufweisen.

4. Verpackungsmaterial gemäß Anspruch 3, bei dem
- die funktionale Beschichtung (15) ein Pigment, ein Korrosionsschutzmittel, eine Oberflächenvergütung und/oder ein Feuchteschutzmittel umfasst.

5. Verpackungsmaterial gemäß einem der vorhergehenden Ansprüche, bei dem
- mindestens eine Teilgruppe der Zellen (11) ungefüllt ist, und/oder
- mindestens eine Teilgruppe der Zellen (11) ein Füllmaterial (16), insbesondere ein Schaummaterial, enthält.

6. Verpackungsmaterial gemäß einem der vorhergehenden Ansprüche, bei dem
- die Zellenwände (12) ein blattförmiges Wandmaterial umfassen und die Zellenwände (12) benachbarter Zellen (11) über ein Fügemittel verbunden sind.

7. Verpackungsmaterial gemäß Anspruch 6, mit mindestens einem der Merkmale
- das Wandmaterial umfasst ein Papiermaterial, insbesondere Papier, Pappe oder Karton, oder ein Kunststoffmaterial,
- das Wandmaterial hat eine Grammatur im Bereich 80 g/m² bis 150 g/m², und
- das Fügemittel umfasst einen Klebstoff.

8. Verpackungsmaterial gemäß einem der vorhergehenden Ansprüche, wobei
- das Zellengefüge (10) eine deformierte Zellenstruktur umfasst, die aus Zellen (11) gebildet ist, die als Vorläufermaterial im undeformierten Zustand eine Querschnittsdimension im Bereich von 5 mm bis 50 mm aufweisen.

9. Verpackungsmaterial gemäß einem der vorhergehenden Ansprüche, wobei
- das Zellengefüge (10) eine Dicke in Normalrichtung im Bereich von 5 mm bis 130 mm aufweist.

10. Verpackungsmaterial gemäß einem der vorhergehenden Ansprüche, bei dem
- das Zellengefüge (10) an beiden Gefügeseiten (13) offen ist und die Ränder der Zellenwände (12) der Zellen (11) zu beiden Gefügeseiten (13) hin freiliegen.

11. Verfahren zur Herstellung eines Verpackungsmaterials (100), insbesondere des Verpackungsmaterials (100) gemäß einem der vorhergehenden Ansprüche, mit den Schritten
- Bereitstellung eines undeformierten Vorläufer-Zellengefüges (20) mit einer flächigen Ausdehnung und mit einer Vielzahl von undeformierten Zellen (21), insbesondere Wabenzellen, die jeweils eine umlaufende Zellenwand (22) aufweisen, die sich gerade zwischen zwei Gefügeseiten (23) in einer Normalrichtung senkrecht zur flächigen Ausdehnung des Zellengefüges (20) erstreckt, wobei das Vorläufer-Zellengefüge (20) eine Dicke in Normalrichtung aufweist, an mindestens einer der Gefügeseiten (23) offen ist und Ränder der Zellenwände (22) der Wabenzellen (21) zu der mindestens einen der Gefügeseiten (23) hin freiliegen, und
- Bildung eines deformierten Zellengefüges (10) durch Pressen des Vorläufer-Zellengefüges (20) mit einer Pressvorrichtung (300), die auf das Vorläufer-Zellengefüge (20) eine Presskraft derart ausübt, dass die Zellenwände (22) der Zellen (21) gekrümmt und die Zellen (21) deformiert werden, wobei das deformierte Zellengefüge (10) eine Dicke in Normalrichtung aufweist, die geringer als die Dicke des Vorläufer-Zellengefüges (20) ist.

12. Verfahren gemäß Anspruch 11, mit mindestens einem der Schritte
- Auftragen einer funktionalen Beschichtung (15) auf mindestens eine Teilgruppe der Zellen (11) mit einem Pigment, einem Korrosionsschutzmittel, einer Oberflächenvergütung und/oder einem Feuchteschutzmittel, und
- Füllen mindestens einer Teilgruppe der Wabenzellen (11) mit einem ein Füllmaterial (16).

13. Verfahren gemäß einem der Ansprüche 11 bis 12, bei dem
- die Pressvorrichtung (300) eine Walzenpresse umfasst, wobei die Bildung des deformierten Zellengefüges (10) durch Förderung des Vorläufer-Zellengefüges (20) durch die Walzenpresse erfolgt.

14. Verfahren gemäß Anspruch 13, bei dem
- die Walzenpresse mindestens zwei Walzenstationen (310, 320) umfasst, an denen die Bildung des deformierten Zellengefüges (10) stufenweise erfolgt.

15. Verfahren gemäß einem der Ansprüche 11 bis 14, bei dem
- die Pressvorrichtung (300) eine Plattenpresse umfasst, wobei die Bildung des deformierten Zellengefüges (10) durch eine flächige Ausübung der Presskraft auf die Gefügeseiten (13) des Vorläufer-Zellengefüges (10) erfolgt.

16. Verwendung eines Verpackungsmaterial (100) gemäß einem der Ansprüche 1 bis 10, als
- Verpackungsmaterial zur Verpackung von Transportgut und/oder Lagergut,
- Baumaterial,
- Isolationsmaterial,
- Sichtschutzmaterial,
- Möbelpolstermaterial, insbesondere Matratze oder Polsterunterlage,
- Pflanz- oder Aussatzträgermaterial,
- Dekorationsmaterial,
- Separator für Kleinstteile, und/oder
- Sportmaterial, insbesondere Sportmatte.
